# EUROPÄISCHE PATENTSCHRIFT

(11) **EP 0 523 578 B1**
(45) Veröffentlichungstag und Bekanntmachung des Hinweises auf die Patenterteilung: **20.03.1996**
(21) Anmeldenummer: 92111845.1
(22) Anmeldetag: 11.07.1992
(51) Int. Cl.: B62D 7/14

(54) **Vierradlenkung für ein Fahrzeug**
Four wheel steering for a vehicle
Direction agissant sur quatres roues pour un véhicule

(30) Priorität: 17.07.1991 US 731594
(43) Veröffentlichungstag der Anmeldung: 20.01.1993
(73) Patentinhaber: DEERE & COMPANY, Moline, Illinois 61265 (US)
(72) Erfinder: Snipes, Terry Lee, East Moline, Illinois 61244 (US)
(74) Vertreter: Feldmann, Bernhard

(56) Entgegenhaltungen:
- US-A- 1 891 578
- US-A- 2 319 880
- PATENT ABSTRACTS OF JAPAN vol. 11, no. 14 (M-553)(2461) 14. Januar 1987 & JP-A-61 188 275 (HONDA MOTOR CO.) 21 August 1986

## Beschreibung

Die Erfindung bezieht sich auf eine Vierradlenkung für ein Fahrzeug, insbesondere für einen in der Rasen- und Grundstückspflege einsetzbaren Kleinschlepper, mit einem Lenkgestänge, das einen mittigen und vorderen horizontal verstellbaren Schwenkteil zum Lenken der vorderen Laufräder und einen mittigen und rückwärtigen horizontal verstellbaren Schwenkteil zum Lenken der rückwärtigen Laufräder aufweist, wobei beide Schwenkteile miteinander verbunden sind. Eine solche Vierradlenkung ist zum Beispiel aus der JP-A-61 188 275 bekannt.

Eine bekannte Vierradlenkung (US-A-4 977 733) ist an einem Kleinschlepper für die Rasen- und Grundstückspflege vorgesehen, der zwischen seinen Achsen mit einem höhenverstellbaren Rasenmäher versehen ist. An den Achsschenkelbolzen aller vier Räder dieses Kleinschleppers greifen Spurhebel an, wobei die beiden vorderen Spurhebel und die beiden rückwärtigen Spurhebel über je eine Spurstange miteinander verbunden sind. Etwa mittig zwischen der Vorder- und Hinterachse ist am Fahrzeugrahmen ein Lenkgetriebe vorgesehen, das einen zu einer Außenseite weisenden Ausleger betätigt, an dem der erste und dritte Stangenteil angelenkt sind. Da bei einer Vierradlenkung die vorderen und die rückwärtigen Laufräder gegensätzlich einschlagen, muß einer der Stangenteile quer über die Fahrzeugbreite bis zu seinem zugehörigen Laufrad geführt werden. Derartige Kleinschlepper haben in der Regel eine sehr geringe Bodenfreiheit und nehmen den in der Höhe verstellbaren Mäher über ein Hubgestänge auf. Damit ist der Stellraum für den Mäher äußerst begrenzt, und bei der bekannten Vierradlenkung befindet sich das Lenkgetriebe noch oberhalb des Mähwerksgehäuses. Hinzu kommt, daß die meisten Mähwerksgehäuse noch in ihrem vorderen Bereich eine Auswurföffnung aufweisen, die eine größere vertikale Ausdehnung als der übrige Bereich des Mähwerksgehäuses aufweist, so daß bei einer Höhenverstellung für die Transportstellung in diesem Bereich ein noch größerer vertikaler Freiraum erforderlich ist. Es ist offensichtlich, daß das Gestänge für die bekannte Vierradlenkung unterhalb des Fahrzeuges einen großen Platz beansprucht, der die Funktionsweise anderer Komponenten, die in diesem Bereich vorgesehen sind, beeinträchtigt.

Bei der bekannten Vierradlenkung (Patent Abstracts of Japan vol. 11 no. 14 (M-553 (2461) 14. Januar 1987 - JP-A-61-188275), von der die Erfindung ausgeht, sind der vordere und der rückwärtige Schwenkteil an einem mittigen Fahrzeugträger angeordnet und miteinander über eine diagonal verlaufende Strebe verbunden. Diese Strebe wandert beim Einschlagen der Räder von einer Seite des Fahrzeugträgers zu dessen anderer Seite und beansprucht damit ebenfalls einen großen Freiraum.

Andererseits ist es auch nicht mehr neu (US-A-1 891 578), bei einem zwei Längsholme aufweisenden Fahrzeugrahmen ein Lenkgestänge mit einer rückwärtigen Schwinge zu versehen, die um eine horizontale Achse drehbar ist, wobei sich das Lenkgestänge mit einem Lenkgetriebe an einer Rahmenseite befindet.

Die mit der Erfindung zu lösende Aufgabe wird darin gesehen, das Gestänge für eine Vierradlenkung platzsparender anzuordnen, damit insbesondere unter dem Fahrzeug angeordnete Komponenten in ihrer Funktionsweise nicht beeinträchtigt werden. Diese Aufgabe ist dadurch gelöst worden, daß das Lenkgestänge eine vordere Schwinge mit einer vertikal verlaufenden Schwenkachse und eine rückwärtige Schwinge mit einer horizontal verlaufenden Schwenkachse aufweist, wobei die vordere Schwinge über einen ersten Stangenteil an den vorderen Schwenkteil und über einen zweiten Stangenteil an die rückwärtige Schwinge angeschlossen ist, die rückwärtige Schwinge über einen dritten Stangenteil an den rückwärtigen Schwenkteil angeschlossen ist und die Längsachse des zweiten Stangenteils zu den Schwenkachsen der ersten und zweiten Schwinge in einem rechten oder etwa rechten Winkel angeordnet ist. Auf diese Weise wird für unter dem Fahrzeug anzubauende Komponenten ein relativ grosser Freiraum freigehalten.

Die an den Schwingen angreifenden Stangenteile benötigen nur einen geringen Stellraum. Da die Schwenkachse der ersten Schwinge vertikal und die Schwenkachse der zweiten Schwinge horizontal verlaufend angeordnet ist, ist ein Schwenken des vorderen an der ersten Schwinge angreifenden Endes des zweiten Stangenteils in einer vertikalen Ebene und ein Schwenken des rückwärtigen an der zweiten Schwinge angreifenden Endes des zweiten Stangenteils in einer horizontalen Ebene beeinträchtigt. Der damit gewonnene Freiraum kann somit dazu ausgenutzt werden, daß Komponenten relativ nah an dem Stangenteil und den Schwingen vorgesehen werden können.

Für ein Fahrzeug, zwischen dessen vorderen und rückwärtigen Laufrädern ein Mähwerksgehäuse am Fahrzeugrahmen höhenverstellbar aufgehängt ist, wird nach der Erfindung ferner vorgeschlagen, daß der zweite Stangenteil seitlich an einer Fahrzeugseite und oberhalb des Mähwerksgehäuses verlaufend angeordnet ist. Damit bleibt bei einer Höhenverstellung auch für eine Auswurföffnung des Mähwerkgehäuses ein ausreichend großer Freiraum und das Mähwerk kann einfach von der den zweiten Stangenteil abgelegenen Seite abgebaut oder angebaut werden.

Im einzelnen kann die Erfindung noch vorsehen, daß der zweite Stangenteil eine Länge aufweist, die zumindest der Länge des Mähwerksgehäuses entspricht. Durch diese Maßnahme behindern die Schwingen eine Höhenbewegung des Mähwerksgehäuses nicht.

Für ein Fahrzeug, dessen Fahrzeugrahmen mindestens zwei längs verlaufende und seitlichen Abstand aufweisende Bauteile beinhaltet, sieht die Erfindung ferner vor, daß die erste und die zweite Schwinge an demselben Bauteil angeschlossen sind. Hierdurch kann das Gestänge der Vierradlenkung mit seinen wesentlichen Teilen an eine Fahrzeugseite gerückt werden, so daß genügend Platz zur Wartung und für einen An- oder Abbau eines Mähwerkes geschaffen ist.

Bei einem Fahrzeug, dessen Motor an einem vorderen Bereich des Fahrzeugrahmens und dessen Endgetriebe an einem rückwärtigen Bereich des Fahrzeugrahmens vorgesehen ist, kann das Lenkgestänge im wesentlichen unterhalb des Fahrzeugrahmens, unterhalb des Motors und unterhalb des Endgetriebes verlaufend angeordnet sein.

Ein günstiger Bewegungsablauf wird dadurch erreicht, daß die zweite Schwinge einen oberen an den Fahrzeugrahmen schwenkbar angeschlossenen Abschnitt, einen unteren den dritten Stangenteil aufnehmenden Abschnitt und einen mittleren Abschnitt aufweist, an dem der zweite Stangenteil mit seinem einen Ende angelenkt ist.

Schließlich kann der rückwärtige Schwenkteil einen nach seitlich außen gerichteten Ausleger aufweisen, an dem der dritte Stangenteil angelenkt ist.

In der Zeichnung ist ein nachfolgend näher erläutertes Ausführungsbeispiel der Erfindung dargestellt. Es zeigt:
- Fig. 1: einen Schlepper für die Rasenpflege, an dem die vorliegende Erfindung Verwendung finden kann,
- Fig. 2: eine Lenkung für die vorderen Laufräder in einer Ansicht von vorne,
- Fig. 3: die Lenkung nach Fig. 2 in der Draufsicht,
- Fig. 4: ein von der Lenkung für die vorderen Laufräder zu einer Lenkung für die rückwärtigen Laufräder führendes Lenkgestänge in der Draufsicht und
- Fig. 5: das Lenkgestänge nach Fig. 4 in Seitenansicht.

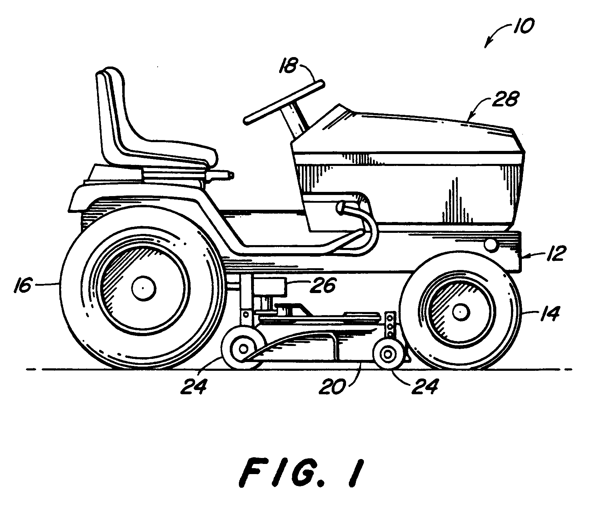

In Fig. 1 der Zeichnung ist ein Fahrzeug 10 in Form eines Kleinschleppers dargestellt, das in der Garten- und Rasenpflege einsetzbar ist und mit dem bevorzugten Ausführungsbeispiel nach der vorliegenden Erfindung ausgerüstet werden kann. Der Kleinschlepper weist einen Rahmen 12 und zwei vordere lenkbare und zwei rückwärtige, antreibbare und ebenfalls lenkbare Laufräder 14 und 16 auf. Auf einem Fahrerstand ist ein Lenkrad 18 erkennbar, bei dessen Betätigung die vorderen und rückwärtigen Laufräder 14 und 16 einschlagbar sind, so daß das Fahrzeug 10 einen sehr engen Wendekreis durchfahren kann. Zwischen den vorderen und rückwärtigen Laufrädern 14 und 16 ist an dem Rahmen 12 des Fahrzeuges 10 ein Mähwerksgehäuse 20 aufgehängt, in dem zum Schneiden von Gras oder dergleichen ein oder mehrere Sichelmesser um vertikale Wellen umlaufen. Stützräder 24 sind ebenfalls an dem Mähwerksgehäuse 20 angeordnet. Sie befinden sich mit einem geringen Abstand oberhalb des Erdbodens und sollen ein Einschneiden der Sichelmesser in den Erdboden verhindern, wenn dieser Bodenunebenheiten aufweist. Beim Auftreffen auf solche wird das Mähwerksgehäuse durch die Stützräder 24 über die Bodenunebenheiten geleitet. Unterhalb des Fahrzeuges 10 und oberhalb des Mähwerksgehäuses 20 ist noch ein Getriebegehäuse 26 zum Antrieb der Sichelmesser innerhalb des Mähwerksgehäuses 20 vorgesehen. Eine Reihe von Riemen und Riemenscheiben kann ebenfalls zum Antrieb der Sichelmesser Verwendung finden. Als Kraftquelle dient in der Regel ein auch die rückwärtigen Räder 16 antreibender Motor 28.

Eine der Einfachheit halber in der Zeichnung nicht dargestellte Antriebswelle erstreckt sich von dem Verbrennungsmotor aus gesehen nach rückwärts und unterhalb des Rahmens 12 zu einem Endantrieb für die rückwärtigen Laufräder 16. Der Endantrieb ist zwischen den beiden rückwärtigen Laufrädern 16 vorgesehen, und eine Zapfwelle erstreckt sich von dem Endantrieb aus und unterhalb des Rahmens 12 zu dem Getriebegehäuse 26 oder gegebenenfalls bis zu einem an der Vorderseite des Kleinschleppers angeschlossenen Gerät, wie beispielsweise einer Schneefräse oder einer Kehrmaschine.

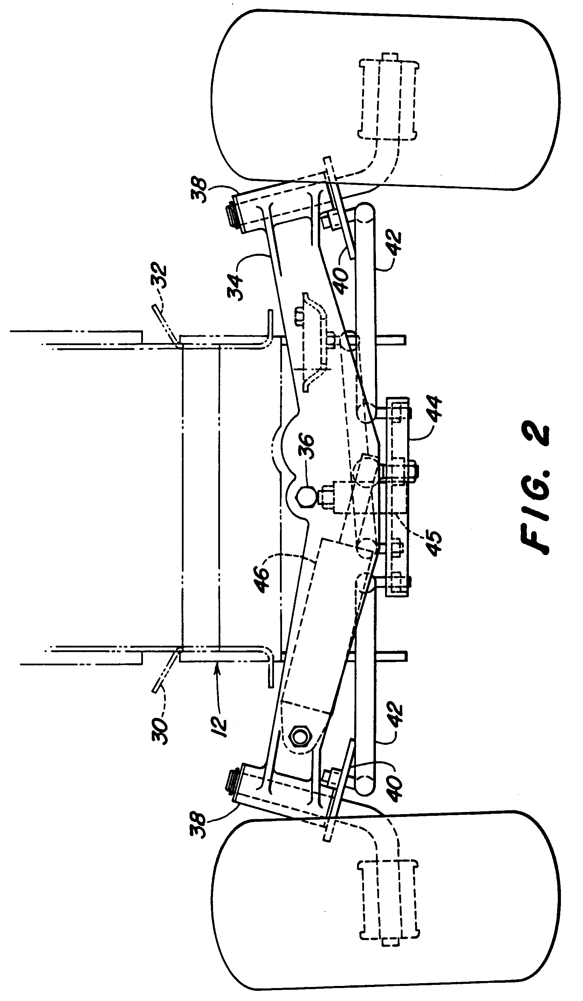

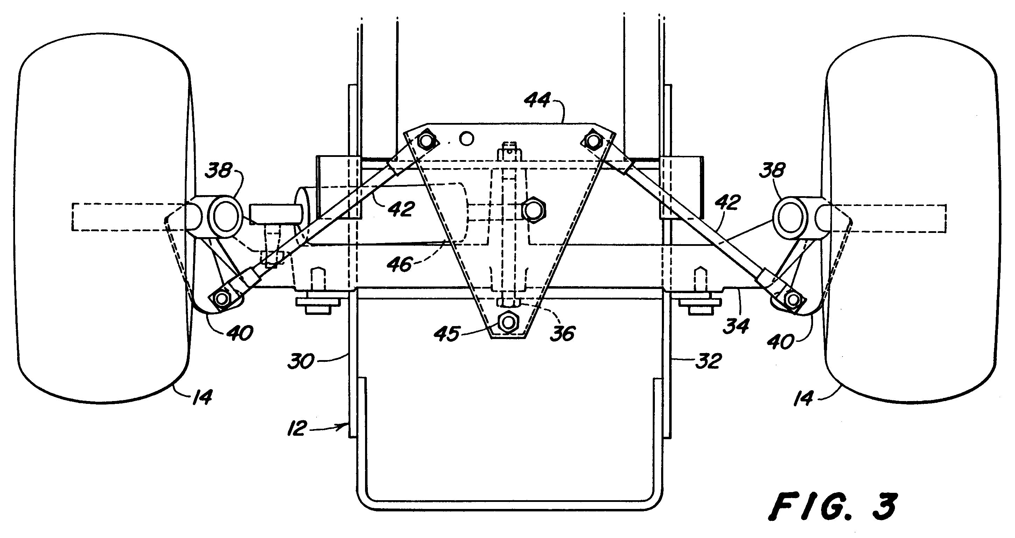

In der nachfolgenden Beschreibung wird zunächst auf die Fig. 2 und 3 Bezug genommen, die die Lenkung für die vorderen Laufräder 14 zeigen. Es ist zu erkennen, daß der Rahmen 12 zwei sich längs erstreckende und gegenseitigen seitlichen Abstand aufweisende Bauteile 30 und 32 beinhaltet und daß an den Rahmen 12 eine Achse 34 über eine horizontal verlaufende Schwenkverbindung 36 angeschlossen ist, die die einschlagbaren Vorderräder 14 aufnimmt. Sollte eins der oder beide vorderen Laufräder während des Einsatzes auf eine Bodenunebenheit oder auf ein seitliches Gefälle auftreffen, so kann die Achse 34 mit Bezug auf den Rahmen 12 vertikal um die sich in Längsrichtung erstreckende Schwenkverbindung 36 verschwenken, wobei die vorderen Laufräder ihren Bodenkontakt beibehalten. Schwenkbar gelagerte Achsschenkelbolzen 38, an denen Spurhebel 40 angreifen, dienen zum verschwenkbaren Anschluß der beiden vorderen Laufräder 14 an die Achse 34. Die beiden vorderen Laufräder 14 sind untereinander über zwei Spurstangen 42 und einen mittigen Schwenkteil 44 gekuppelt, wobei der mittige Schwenkteil 44 um eine vertikal verlaufende, an die Achse 34 etwa in der Fahrzeuglängsmitte angeschlossene Verbindung 45 verschwenken kann. Ein hydraulischer Zylinder 46, der über das Lenkrad 18 betätigbar ist, ist an den vorderen Schwenkteil 44 angeschlossen und kann die Schwenkplatte 44 auf einem Bogen verschwenken, dessen Mittelpunkt durch die vertikal verlaufende Verbindung 45 gebildet ist. Betätigt die Bedienungsperson das Lenkrad 18, dann verstellt der hydraulische Zylinder 46 den vorderen Schwenkteil 44 um seine Verbindung 45 mit der Achse 34. Wenn der Schwenkteil 44 verschwenkt, verstellen sich die Spurstangen 42 und bewirken ein Einschlagen der Spurhebel 40 an den Achsschenkelbolzen 38. Beim Verstellen der Spurhebel 40 schlagen die vorderen Laufräder 14 ein und das Fahrzeug kann eine Kurve durchfahren.

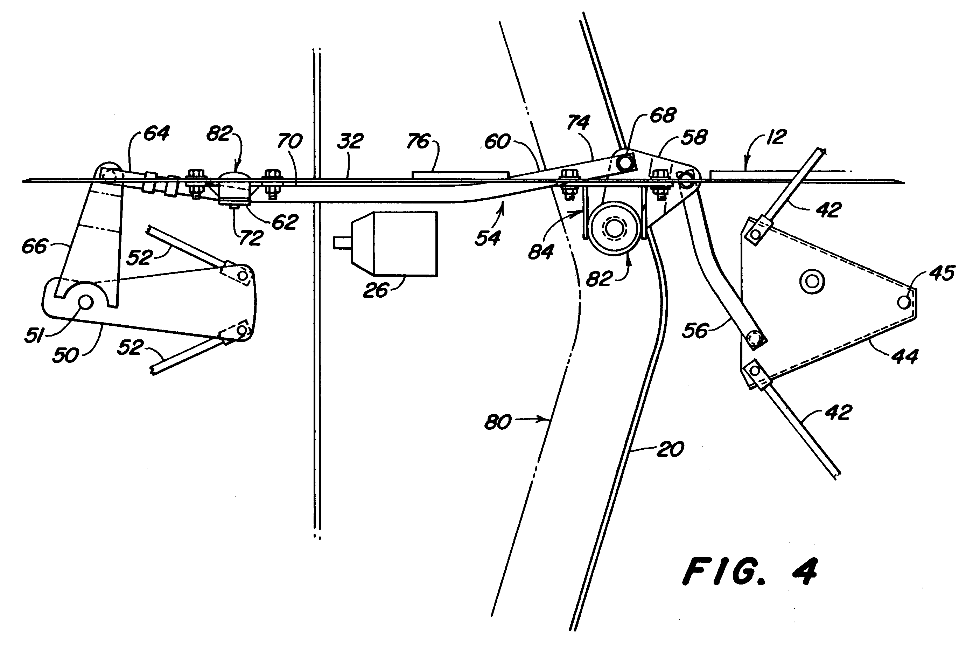

Fig. 4 zeigt ausschnittsweise die Verbindung des vorderen Schwenkteils 44 mit der Lenkung der rückwärtigen Laufräder 16. Man erkennt einen rückwärtigen und ebenfalls mittig angeordneten weiteren Schwenkteil 50, der um eine vertikale etwa in der Fahrzeuglängsmitte liegende Achse 51 drehen kann und an dem zwei weitere Spurstangen 52 angeschlossen sind, die zu den nicht dargestellten Radaufhängungen der rückwärtigen Laufräder 16 führen. Ähnlich wie die vorderen Laufräder 14 können auch die rückwärtigen Laufräder 16 um im wesentlichen vertikal verlaufende Achsen einschlagen, die durch deren Achsschenkelbolzen definiert werden, und zwar in Abhängigkeit von der Verstellung der rückwärtigen Spurstangen 52 beim Verschwenken des rückwärtigen Schwenkteils 50.

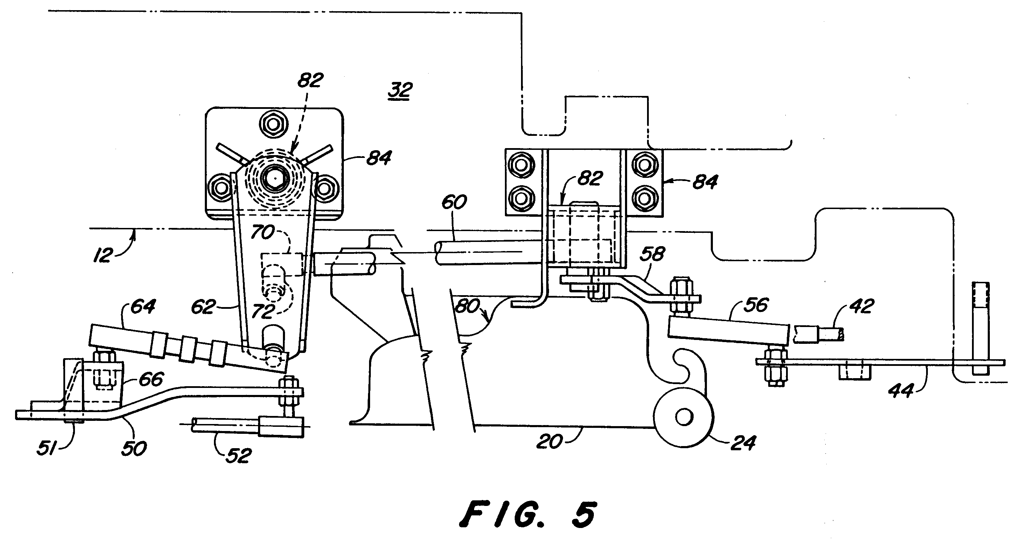

Ein in den Fig. 4 und 5 wiedergegebenes Lenkgestänge 54 überträgt die Bewegung des vorderen Schwenkteils 44, sofern das Lenkrad 18 von der Bedienungsperson betätigt wird, auf den rückwärtigen Schwenkteil 50. Dieses Lenkgestänge 54 besteht im einzelnen aus einem ersten Stangenteil 56, der schwenkbar an den vorderen mittigen Schwenkteil 44 angeschlossen ist, sich von diesem aus gesehen nach der linken Außenseite des Rahmens 12 erstreckt und unterhalb der Rahmens angeordnet ist. Ein Winkelhebel oder eine erste Schwinge 58 ist mit dem anderen Ende des ersten Stangenteils 56 gelenkig verbunden und an den Rahmen 12 derart angeschlossen, daß sie um eine vertikale Achse verstellt werden kann. Mit rückwärtigem Abstand zu der ersten Schwinge 58 ist an dem Rahmen 12 eine zweite Schwinge 62 angeschlossen, die um eine horizontal verlaufende Achse verstellbar ist und mit der ersten Schwinge 58 über einen zweiten Stangenteil 60 in Verbindung steht. Der zweite Stangenteil 60 ist an den beiden Schwingen 58 und 62 angelenkt und erstreckt sich oberhalb des Getriebegehäuses 26 und des Mähwerksgehäuses 20. Ein dritter Stangenteil 64 erstreckt sich zwischen der zweiten Schwinge 62 und einem Ausleger 66 an dem rückwärtigen mittigen Schwenkteil 50.

Dreht nun die Bedienungsperson das Lenkrad 18, dann verstellt der hydraulische Zylinder 46 den vorderen und mittigen Schwenkteil 44 sowie die beiden Spurstangen 42. Diese wiederum verstellen die an die Achsschenkelbolzen 38 angreifenden Spurhebel 40, wobei die vorderen Laufräder 14 einschlagen. Gleichzeitig wird die Verstellung des ersten Schwenkteils 44 über das Lenkgestänge 54 auf den rückwärtigen und mittigen Schwenkteil 50 derart übertragen, daß die rückwärtigen Laufräder 16 entgegengesetzt eingeschlagen werden, so daß das Fahrzeug eine sehr enge Wendung ausführen kann. Im einzelnen wird bei einer Verstellung des vorderen mittigen Schwenkteils 44 der erste Stangenteil 56 verstellt und die erste Schwinge 58 um ihre vertikale Lagerung verschwenkt. Diese Verschwenkung wiederum resultiert in einer Verstellung des zweiten Stangenteils 60 und in einer Verschwenkung der zweiten Schwinge 62 um ihre horizontale Schwenkachse. Dabei wird der dritte Stangenteil 64 verstellt und der Ausleger 66 wird zusammen mit dem rückwärtigen mittigen Schwenkteil 50 um dessen vertikale Achse 51 verschwenkt. Die rückwärtigen Spurstangen 52 werden verstellt und die rückwärtigen Laufräder 16 entsprechend eingeschlagen. Damit bewirkt das Lenkgestänge 54 ein Einschlagen der rückwärtigen Laufräder 16 bei einem Einschlagen der vorderen Laufräder 14. Hierbei kann das Lenkgestänge derart ausgelegt sein, daß die Einschlagwinkel von vorderen und rückwärtigen Laufrädern 14 und 16 unterschiedlich sind, zum Beispiel kann der Einschlagwinkel der rückwärtigen Laufräder kleiner sein.

Es wurde bereits erwähnt, daß der Rahmen 12 ein Paar sich in Fahrzeuglängsrichtung erstreckende Bauteile 30 und 32 aufweist, die in etwa die seitliche Begrenzung des Fahrzeugs bilden. Die erste und die zweite Schwinge 58 und 62 sind jeweils schwenkbar an den links außen liegenden Bauteil 32 angeschlossen. Damit liegt auch das Lenkgestänge 54 mit seinen wesentlichen Teilen, wie den zweiten an die erste und an die zweite Schwinge angeschlossenen Stangenteil 60, an der linken Fahrzeugseite und behindert somit nicht andere Komponenten, wie das Getriebegehäuse 26 oder die sich längs erstreckende Antriebswelle, die alle näher an der Längsmittelebene des Fahrzeuges liegen. Außerdem benötigt das von dem Mähwerksgehäuse 20 getragene Getriebegehäuse 26 einen gewissen Freiraum, damit das Mähwerksgehäuse 20 von dem Fahrzeug abgebaut oder unter dem Fahrzeug weggezogen werden kann. Da sich das Lenkgestänge 54 im wesentlichen an einer Seite des Fahrzeuges 10, und zwar nahe dem linken Bauteil 32, befindet, kann das Mähwerksgehäuse mit seinen angeschlossenen Komponenten leicht von der anderen Maschinenseite abgezogen oder abgebaut werden, ohne daß das Lenkgestänge 54 diesen Vorgang behindern oder sogar verhindern würde.

Während eines Lenkvorganges bzw. beim Durchfahren einer Kurve verstellt sich das Lenkgestänge 54 nach dem bevorzugten Ausführungsbeispiel. Es benötigt hierzu einen gewissen Freiraum. Wie bereits ausgeführt wurde, erstreckt sich der zweite Stangenteil im wesentlichen in Fahrzeuglängsrichtung oberhalb des Mähwerksgehäuses 20. Wenn nun das Fahrzeug eine Kurve durchfährt, verstellt sich der zweite Stangenteil 60 in Richtung seiner Längsachse und auch längs mit Bezug auf das Fahrzeug. Der zweite Stangenteil 60 ist mit seinen Enden an die erste und die zweite Schwinge 58 und 62 angelenkt, die wiederum an den Rahmen 12 derart schwenkbar angeschlossen sind, daß sie um ihre entsprechenden Schwenkachsen verschwenken können. Bei dem bevorzugten Ausführungsbeispiel sind die Längsachse des zweiten Stangenteils 60 und die Schwenkachsen der ersten und zweiten Schwinge 58 und 62 zueinander in einem Winkel von etwa 90° angeordnet, d. h. etwa rechtwinklig. Wenn die erste Schwinge 58 beim Lenken um ihre vertikale Schwenkachse verschwenkt, wird die vordere Anschlußstelle 68 des vorderen Endes des zweiten Stangenteils an die erste Schwinge 58 sich sowohl seitlich als auch in Längsrichtung verstellen, und zwar auf einem Kreisbogen, dessen Mittelpunkt durch die vertikale Schwenkachse der ersten Schwinge 58 bestimmt ist. Andererseits ist die seitliche Bewegung des rückwärtigen Abschnittes 70 des zweiten Stangenteils 60 eingeschränkt, da die zweite Schwinge 62 nicht um eine vertikale Schwenkachse verstellbar ist. Damit wird nur ein sehr geringer seitlicher Freiraum von dem rückwärtigen Abschnitt des zweiten Stangenteils 60 benötigt, wenn das Fahrzeug eine Kurve durchfährt. Würde die zweite Schwinge 62 ebenso wie die erste Schwinge 58 um eine vertikale Schwenkachse verstellt, so wäre für das rückwärtige Ende des zweiten Stangenteils ein erheblich größerer seitlicher Freiraum erforderlich.

Die Anschlußstelle 72 des zweiten Stangenteils 60 an die zweite Schwinge 62 verstellt sich bei einem Kurvenfahren sowohl vertikal als auch in Längsrichtung mit Bezug auf das Fahrzeug, und zwar auf einem Kreisbogen, dessen Mittelpunkt die horizontale Schwenkachse bildet, um die zweite Schwinge 62 verstellbar ist. Jedoch ist dabei die vertikale Bewegung des vorderen Abschnittes 74 des zweiten Stangenteils eingeschränkt, da die erste Schwinge 58, an die der vordere Abschnitt 74 des zweiten Stangenteils 60 angeschlossen ist, nicht um eine horizontale Schwenkachse verstellbar ist. Die vertikale Verstellung des vorderen Abschnittes 74 des zweiten Stangenteils 60 ist damit beim Kurvenfahren äußerst gering. Ein wesentlich größerer vertikaler Freiraum wäre erforderlich, wenn auch die erste Schwinge 58 um eine sich horizontal und seitlich erstreckende Schwenkachse verstellbar wäre. Da der rückwärtige Abschnitt 70 des zweiten Stangenteils 60 nur eine geringe seitliche Bewegung ausführen kann, kann der zweite Stangenteil 60 in dem relativ kleinen Raum zwischen dem Getriebegehäuse 26 und einer an den Rahmen 12 angeschlossenen Tragplatte 76 untergebracht werden. Die Tragplatte 76 trägt nicht dargestellte Hubstreben, die das Mähwerksgehäuse 20 unterhalb des Fahrzeuges 10 tragen.

Erwähnt wurde ebenfalls bereits, daß die Längsmittelachse des zweiten Stangenteils 60 mit den Schwenkachsen der ersten und der zweiten Schwinge 58 und 62 einen Winkel von etwa 90° bilden. Die Schwenkachsen sind einmal vertikal und einmal horizontal gerichtet, weshalb die Schwingen 58 und 62 die entsprechenden Abschnitte 70 und 74 an den beiden Enden des zweiten Stangenteils veranlassen, sich in primären und sekundären Richtungen zu verstellen, d. h. die erste Schwinge 58 verstellt den zweiten Stangenteil sowohl in Längsrichtung als auch etwas in seitlicher Richtung und die zweite Schwinge 62 verstellt den zweiten Stangenteil 60 ebenfalls in Längsrichtung und etwas in vertikaler Richtung. Damit verstellen beide Schwingen 58 und 60 den zweiten Stangenteil 60 in der primären oder Längsrichtung. Diese Verstellung wird durch eine Verstellung des ersten Schwenkteils 44 ausgelöst und resultiert in einer Verstellung des rückwärtigen und mittigen Schwenkteils 50 bei einer Kurvenfahrt des Fahrzeuges 10. Die beiden Schwingen 58 und 62 bewirken ebenfalls, daß die Abschnitte 70 und 74 der beiden Enden des zweiten Stangenteils 60 in ihren sekundären Richtungen verstellt werden. Eine Verstellung in den sekundären Richtungen sollte jedoch nicht den Einsatz des Mähwerksgehäuses 20 oder des Fahrzeuges 10 selbst behindern. Das bevorzugte Ausführungsbeispiel der vorliegenden Erfindung erlaubt den entsprechenden Endabschnitten 70 und 74 des zweiten Stangenteils 60 im wesentlichen, sich in unterschiedlichen Ebenen zu verstellen. Der vordere Abschnitt 74 des zweiten Stangenteils 60 verstellt sich in einer im wesentlichen horizontal verlaufenden Ebene und hält damit einen großen Freiraum für die Höhenverstellung eines Auswurfabschnittes 80 des Mähwerksgehäuses 20 in seine höchste Position offen. Der rückwärtige Abschnitt 70 des zweiten Stangenteils 60 verstellt sich in einer im wesentlichen horizontal verlaufenden Ebene, ohne eine nennenswerte seitliche Bewegung ausführen zu können. Der rückwärtige Abschnitt 70 des zweiten Stangenteils 60 behindert daher nicht den Einsatz von Fahrzeugkomponenten, wie das Getriebegehäuse 26 oder die Tragplatte 76, die nur einen geringen seitlichen Abstand zu dem zweiten Stangenteil 60 aufweisen.

Das Mähwerksgehäuse 20 ist, wie bereits ausgeführt wurde, mit dem Auswurfabschnitt 80 oder einer Auswurföffnung versehen, die in einem vorderen Bereich des Mähwerksgehäuses vorgesehen ist. Das Mähwerksgehäuse 20 ist aber höhenverstellbar, wozu ein gewisser Freiraum erforderlich ist, der durch den vorderen Abschnitt 74 des zweiten Stangenteils nicht beansprucht werden darf. Bei einem Fahrzeug, das zwischen seinen Achsen mit einem Mähwerk ausgerüstet ist, das einen Antrieb aufweist und an einer Platte am Fahrzeug aufgehängt ist, ist der verbleibende Raum, durch den der rückwärtige Abschnitt 70 des zweiten Stangenteils geführt werden kann, sehr eng, so daß hier größere seitliche Bewegungen sehr störend wirken würden. Andererseits kann die vorliegende Erfindung auch an Fahrzeugen Verwendung finden, das andere Komponenten aufweist, für die das Lenkgestänge 54 einen ausreichenden Freiraum frei halten muß. Das Lenkgestänge 54 braucht nicht unbedingt an der linken Fahrzeugseite angeschlossen zu werden. Es kann auch mit dem rechten Bauteil 30 verbunden werden, sofern dann ein eventuell vorgesehenes Mähwerk von der linken Seite abgebaut werden kann.

Die Schwingen 58 und 62 sind an das Fahrzeug 10 über Schwenkmechanismen 82 angeschlossen, die Befestigungsmittel 84 mit Lagern aufweisen, in denen die Schwingen 58 und 62 verschwenken können.

## Patentansprüche

1. Vierradlenkung für ein Fahrzeug, insbesondere für einen in der Rasen- und Grundstückspflege einsetzbaren Kleinschlepper, mit einem Lenkgestänge (54), das einen mittigen und vorderen horizontal verstellbaren Schwenkteil (44) zum Lenken der vorderen Laufräder (14) und einen mittigen und rückwärtigen horizontal verstellbaren Schwenkteil (50) zum Lenken der rückwärtigen Laufräder (16) aufweist, wobei beide Schwenkteile (44, 50) miteinander verbunden sind, dadurch gekennzeichnet, daß das Lenkgestänge (54) eine vordere Schwinge (58) mit einer vertikal verlaufenden Schwenkachse und eine rückwärtige Schwinge (62) mit einer horizontal verlaufenden Schwenkachse aufweist, wobei die vordere Schwinge (58) über einen ersten Stangenteil (56) an den vorderen Schwenkteil (44) und über einen zweiten Stangenteil (60) an die rückwärtige Schwinge (62) angeschlossen ist, die rückwärtige Schwinge (62) über einen dritten Stangenteil (64) an den rückwärtigen Schwenkteil (50) angeschlossen ist und die Längsachse des zweiten Stangenteils (60) zu den Schwenkachsen der ersten und zweiten Schwinge (58, 62) in einem rechten oder etwa rechten Winkel angeordnet ist.

2. Vierradlenkung nach Anspruch 1 für ein Fahrzeug (10), zwischen dessen vorderen und rückwärtigen Laufrädern (14, 16) ein Mähwerksgehäuse (20) am Fahrzeugrahmen (12) höhenverstellbar aufgehängt ist, dadurch gekennzeichnet, daß der zweite Stangenteil (60) seitlich an einer Fahrzeugseite und oberhalb des Mähwerksgehäuses (20) verlaufend angeordnet ist.

3. Vierradlenkung nach Anspruch 1 oder 2, dadurch gekennzeichnet, daß der zweite Stangenteil (60) eine Länge aufweist, die zumindest der Länge des Mähwerksgehäuses (20) entspricht.

4. Vierradlenkung nach Anspruch 2 für ein Fahrzeug (10), dessen Fahrzeugrahmen (12) mindestens zwei längs verlaufende und seitlichen Abstand aufweisende Bauteile (30, 32 ) beinhaltet, dadurch gekennzeichnet, daß die erste und die zweite Schwinge (58, 62) an demselben Bauteil (30 oder 32) angeschlossen sind.

5. Vierradlenkung nach einem oder mehreren der vorherigen Ansprüche für ein Fahrzeug (10), dessen Motor (28) an einem vorderen Bereich des Fahrzeugrahmens (12) und dessen Endgetriebe an einem rückwärtigen Bereich des Fahrzeugrahmens (12) vorgesehen ist, dadurch gekennzeichnet, daß das Lenkgestänge (54) im wesentlichen unterhalb des Fahrzeugrahmens (12), unterhalb des Motors (28) und unterhalb des Endgetriebes verlaufend angeordnet ist.

6. Vierradlenkung nach einem oder mehreren der vorherigen Ansprüche, dadurch gekennzeichnet, daß die zweite Schwinge (62) einen oberen an den Fahrzeugrahmen (12) schwenkbar angeschlossenen Abschnitt, einen unteren den dritten Stangenteil (64) aufnehmenden Abschnitt und einen mittleren Abschnitt aufweist, an dem der zweite stangenteil mit seinem einen Ende (70) angelenkt ist.

7. Vierradlenkung nach Anspruch 6, dadurch gekennzeichnet, daß der rückwärtige Schwenkteil (50) einen nach seitlich außen gerichteten Ausleger (66) aufweist, an dem der dritte Stangenteil (64) angelenkt ist.

## Claims

1. Four-wheel steering mechanism for a vehicle, in particular for a small tractor which can be employed for the care of lawns and plots, with a steering linkage (54), which comprises a central and forward horizontally adjustable pivot member (44) for steering the front wheels (14) and a central and rearward horizontally adjustable pivot member (50) for steering the rear wheels (16), wherein both pivot members (44, 50) are connected to one another, characterised in that the steering linkage (54) comprises a forward rocker member (58) with a pivot axis extending vertically and a rearward rocker member (62) with a pivot axis extending horizontally, wherein the forward rocker member (58) is connected through a first rod member (56) to the forward pivot member (44) and through a second rod member (60) to the rearward rocker member (62), the rearward rocker member (62) is connected through a third rod member (64) to the rearward pivot member (50) and the longitudinal axis of the second rod member (60) is arranged at a right angle or approximately a right angle to the pivot axes of the first and second rocker member (58, 62).

2. Four-wheel steering mechanism according to claim 1 for a vehicle (10) between the front and rear wheels (14, 16) of which a mower housing (20) is suspended in height adjustable manner on the vehicle frame (12), characterised in that the second rod member (60) is arranged to the side on one side of the vehicle and extending above the mower housing (20).

3. Four-wheel steering mechanism according to claim 1 or 2, characterised in that the second rod member (60) has a length which corresponds at least to the length of the mower housing (20).

4. Four-wheel steering mechanism according to claim 2 for a vehicle (10) of which the frame (12) contains at least two structural members (30, 32) extending longitudinally and having lateral spacing, characterised in that the first and the second rocker member (58, 62) are connected to the same structural member (30 or 32).

5. Four-wheel steering mechanism according to one or several of the preceding claims for a vehicle (10), the engine (28) of which is provided on a forward region of the vehicle frame (12) and the end transmission of which is provided on a rearward region of the vehicle frame (12), characterised in that the steering linkage (54) is arranged extending essentially beneath the vehicle frame (12), beneath the engine (28) and beneath the end transmission.

6. Four-wheel steering mechanism according to one or several of the preceding claims, characterised in that the second rocker member (62) comprises an upper section connected pivotably to the vehicle frame (12), a lower section receiving the third rod member (64) and a central section on which the second rod member is pivoted by one end (70).

7. Four-wheel steering mechanism according to claim 6, characterised in that the rearward pivot member (50) comprises an arm (66) oriented outwardly to the side on which the third rod member (64) is pivoted.

## Revendications

1. Direction agissant sur quatre roues pour un véhicule, notamment pour un petit tracteur utilisable pour l'entretien de pelouses et de terrains, comportant une tringlerie de direction (54), qui comporte une partie pivotante centrale avant (44) déplaçable horizontalement, pour le braquage des roues avant (14) et une partie pivotante centrale arrière (50) déplaçable horizontalement pour le braquage des roues arrière (16), les deux parties pivotantes (44,50) étant reliées entre elles, caractérisée en ce que la tringlerie de direction (54) comporte un bras oscillant avant (58) comportant un axe vertical de pivotement, et un bras oscillant arrière (62) comportant un axe horizontal de pivotement, le bras oscillant avant (58) étant raccordé par l'intermédiaire d'une première barre (56) à la partie pivotante avant (44) et par l'intermédiaire d'une seconde barre (60) au bras oscillant arrière (62), le bras oscillant arrière (62) étant raccordé par l'intermédiaire d'une troisième barre (64) à la partie pivotante arrière (50), et l'axe longitudinal de la seconde barre (60) étant disposé perpendiculairement ou presque perpendiculairement aux axes de pivotement des premier et second bras oscillants (58,62).

2. Direction agissant sur quatre roues selon la revendication 1 pour un véhicule (10), entre les roues avant et arrière (14,16) duquel un carter (20) d'une unité de coupe est suspendu, de manière à être réglable en hauteur, au châssis (12) du véhicule, caractérisée en ce que la seconde barre (60) est disposée latéralement sur un côté du véhicule et au-dessus du carter (20) de l'unité de coupe.

3. Direction agissant sur quatre roues selon la revendication 1 ou 2, caractérisée en ce que la seconde barre (60) possède une longueur qui correspond au moins à la longueur du carter (20) de l'unité de coupe.

4. Direction agissant sur quatre roues selon la revendication 2 pour un véhicule (10), dont le châssis (12) contient au moins deux composants (30,32) qui s'étendent longitudinalement et sont situés à une certaine distance latérale, caractérisée en ce que les premier et second bras oscillants (58,62) sont raccordés au même composant (30 ou 32).

5. Direction agissant sur quatre roues selon une ou plusieurs des revendications précédentes pour un véhicule (10), dont le moteur (28) est disposé dans une partie avant du châssis (12) du véhicule et dont la transmission d'extrémité est prévue sur une partie arrière du châssis (12) du véhicule, caractérisée en ce que la tringlerie de direction (54) est disposée de manière à s'étendre essentiellement au-dessous du châssis (12) du véhicule, au-dessous du moteur (28) et au-dessous de la transmission d'extrémité.

6. Direction agissant sur quatre roues selon une ou plusieurs des revendications précédentes, caractérisée en ce que le second bras oscillant (62) possède une section supérieure raccordée, de manière à pouvoir pivoter, au châssis (12) du véhicule, une section inférieure, qui loge la troisième barre (64), et une section médiane, à laquelle la seconde barre est articulée par l'une de ses extrémités (70).

7. Direction agissant sur quatre roues selon la revendication 6, caractérisée en ce que la partie pivotante arrière (50) possède un bras en console (66) dirigé latéralement vers l'extérieur et sur lequel est articulée la troisième barre (64).
